## Europäisches Patentamt

## European Patent Office

## Office européen des brevets

(11) Publication number: **0 193 729**
**B1**

(12) **EUROPEAN PATENT SPECIFICATION**

(45) Date of publication of patent specification: **27.04.88**

(51) Int. Cl.⁴: **B 62 B 9/24**

(21) Application number: **86101148.4**

(22) Date of filing: **29.01.86**

(54) An arrangement for the assembly of frontal handrails to children's pushchairs or strollers.

(30) Priority: **27.02.85 ES 285340**
**27.02.85 ES 285341**

(43) Date of publication of application:
**10.09.86 Bulletin 86/37**

(45) Publication of the grant of the patent:
**27.04.88 Bulletin 88/17**

(84) Designated Contracting States:
**BE DE FR GB IT NL**

(56) References cited:
**EP-A-0 142 068**
**DE-A-3 007 810**
**DE-A-3 018 160**

(73) Proprietor: **Jané Cabagnero, Ramon**
**203 Cartagena Street**
**08013 Barcelona (ES)**

(72) Inventor: **Jané Cabagnero, Ramon**
**203 Cartagena Street**
**08013 Barcelona (ES)**

(74) Representative: **Kern, Wolfgang Dipl.-Ing. et al**
**Patentanwälte Tischer, Kern & Brehm Albert-Rosshaupter-Strasse 65**
**D-8000 München 70 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention refers to an arrangement for assembling frontal handrails to children's pushchairs or strollers.

For several years are already known in the art several types of frontal handrails detachably engageable to the armrests of the pushchair or stroller or either detachably engageable to an end while in the other they are being pivotedly fitted, all that to have the child easily placed and removed at the pushchair or stroller whereas an arrangement for a carrycot on the pushchair or stroller seat can also be available when the seatback is reclined backwardly.

Although the known arrangements for the assembly of the handrails perform such a function generally they have a complex structure, albeit being antiaestetic, and become very difficult to be handled by housewives or people in charge of a child, some of these arrangements have externally projected members and can thus be a cause for injuries of damages to the child.

It is an object of the invention to provide a very simple arrangement for assembling frontal handrails to children's pushchairs or strollers being easily engagable and disengagable by only depressing a flexible retainer.

The structure of this arrangement shall enable it to be advantageously applied to a frontal handrail placed at the pushchair or stroller being the object of the Spanish Utility Model no. 275 941 of the same applicant corresponding to EP—A—0142068, the handrail is pivoting by its ends onto the uper end of a tierod combining the armrest with the frontal leg of the pushchair or stroller.

This object is achieved by the two versions of the invention comprising the features of independent claims 1 and 4. The first version of the invention comprises a box component with an opening at the bottom part is provided at least at one of the ends of the handrail for being detachably inserted into a shank made up by the upper end of the tierod and being located at a frontal housing in the associated armrest, this insertion being kept up by means of a flexible retainer, a tooth of said box component is engaging therefrom.

In the second version of the invention there is provided a box component with an upper opening to be interlocked with the pushchair or stroller sidemember and the shank to be a portion of a pivoted component at the end of the handrail, this component to be a retainer-holder for engagement with the tooth provided in the shankholder component.

These and other characteristics should be better understood in the following detailed description by reference to the attached drawing sheets wherein preferred embodiments of both versions of the invention are shown only by way of non-exhaustive example of the scope of the present invention.

In the drawings:

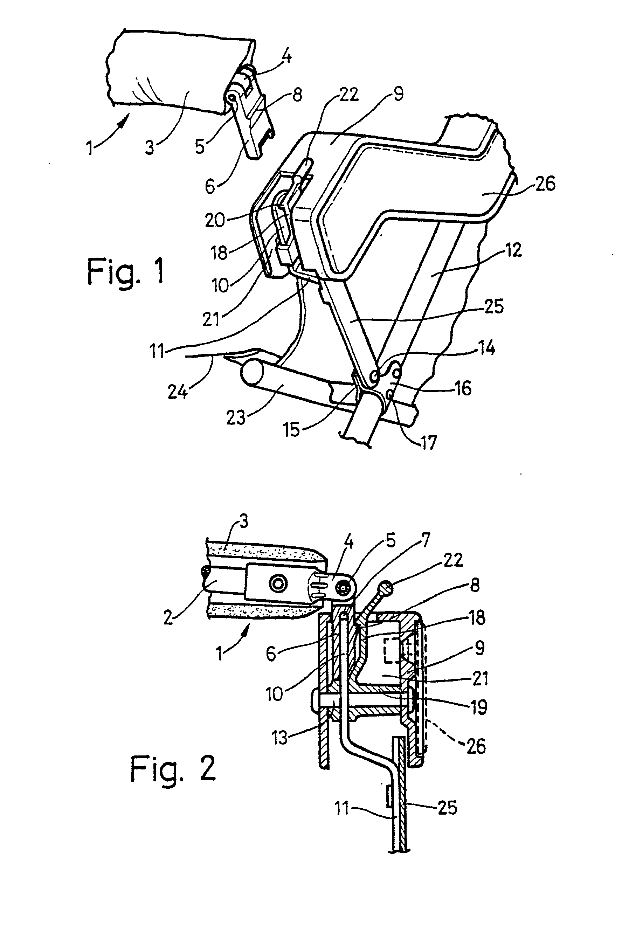

Figure 1 shows a perspective view of the whole of the first version of this arrangement with the handrail not engaged;

Figure 2 shows in an elevation view of said arrangement with the handrail engaged to the armrest;

Figure 3 also shows in a perspective view and while not engaged a second version of the arrangement; and

Figure 4 shows in a larger scaled elevation cross-sectioned view said second version with the arrangement engaged.

Referring to the drawings, handrail-1- comprises a core-2- made up with several mutually pivoted lengths and covered by a stuffed sheath-3-. At least one of the ends of the handrail shows at the top ring-4- the pivoting effect by means of a pin -5- of a component-6- making up the box-7- with a lower opening and comprising a tooth-8- at the external side.

In the engaging of the handrail to the armrest-9- the box component-6-7- is engaged on a flat shank-10- made up by the inflectioned upper end of a tierod-11- pivotedly associating the armrest to the front leg-12-, whereby said tierod is pivoted in the armrest on being crossed by an armrest transversally interlocked shaft-13-and is pivoted to the front leg on being downwardly crossed by a pin-14- in turn crossed the lugs-15-of a flange-16- locked by means of rivets-17- to the leg.

Eventually retention of the box component in the shank-10-is achieved by means of a flexible retainer-18- interlocked to a bushing-19- strung onto the shaft-13- and showing a tooth-20- at the internal side which is engaging onto the tooth-8- of the box component-6-.

The shank-10-, the engaged box component-6- and the retainer-18- are at a frontal housing -21- of the armrest, a retainer terminal -22- upwardly being projected therefrom for access to the retainer, this retainer on being laterally separated releases the box component and thus the handrail can be detached.

The handrail engagement is automatically performed upon engaging the box component-6- into the shank-10- since in the downwardly motion of said component, the lower inclined plane shown by the tooth-8- laterally separates the flexible retainer-18- in a way such as when said tooth overrides the tooth-20- of the retainer, the retainer is resiliently retrieved by said tooth-20-engaging onto the one of the component-6-.

One of said rivets-17- makes up the pivoting shaft of the front leg-12- to the side-23- of a flexible seat-24-. By numeral-25- is shown a profile of plastic material decoratively covering the tierod-11- and by numeral-26- is shown a decorative plate engaged into the armrest external side.

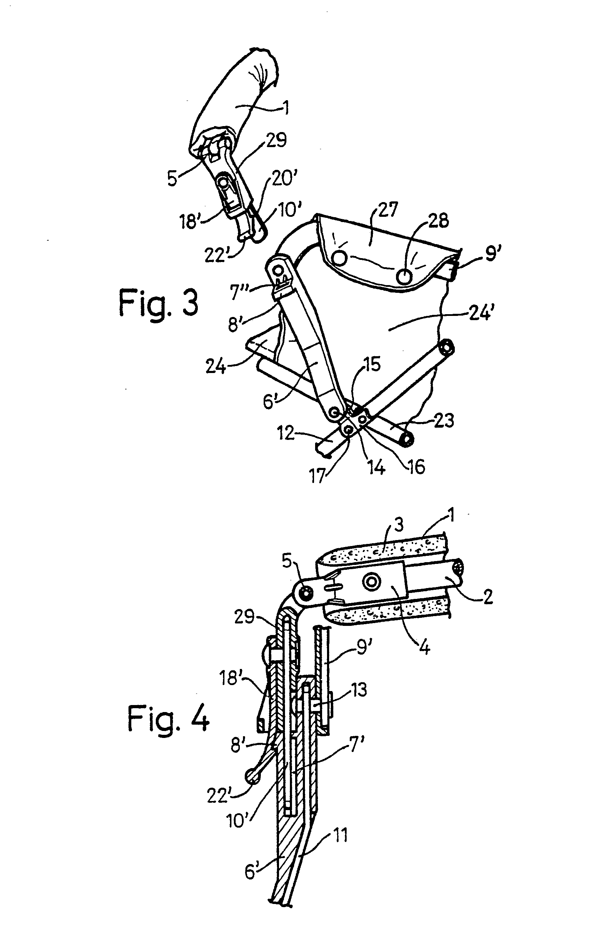

As seen in the version of the figures 3 and 4 the arrangement for the assembly of the handrail comprises a plastic material moulded component-6'- which is overlapped and clamped on the tierod-11- pivotedly associating the frontal end of the armrest-9'- with the frontal leg-12-, which leg is being pivoted to the side-23- of the frame of the pushchair or stroller's seat-24-, said seat comprising sides-24'- being folded on the armrests by making up some lips-27- showing fastening means-28-.

Said component-6'- at the upper half shows a thickening making up a box-7'- with an upper opening-7''- frontally comprising a tooth-8'-. Said box is provided with a flat shank-10'-downwardly interlocked to one component-29- linked by a hinge-5- to the endpiece-4- of the frontal handrail being covered by s stuffed sheath-3-, said handrail being made up with several mutually pivoted components to allow transversal folding of the pushchair or stroller.

The holding component of the shank-10'- comprises the positioning of a flexible retainer-18'-involving an engaging tooth-20'- into the tooth-8'- of the component-6'-, said retainer extending along by making up a gripping appendage-22'-.

As figures 3 is also illustrating, to engage the handrail it would be sufficient to insert the shank-10'- in the box-7'- automatically engaging the tooth-20'- of the retainer into the tooth-8'- of the component-6'-.

The handrail is disengaged by pulling the appendage-22'-from the retainer and the disengagement is thus obtained and then the shank-10- can be freely released as regards the box of the component-6'-.

This arrangement can be provided in only one of the handrail ends or either in the two handrail ends, in the first case the other handrail end must be pivoted to the armrest so that the child is easily placed and removed. In the second case, with the handrail removed a carrycot can be provided and fitted on the pushchair or stroller seat when the child is still very young or a totter. The handrail due to the pivoting joints allows the pushchair or stroller to be folded both downwardly as transversally.

The invention within its essentiality can practically be embodied in other ways of performance only differing in detail from the one shown herein by way of example. This arrangement therefore can be manufactured for the assembly of frontal handrails to children's pushchair or strollers, in any size or shape with the most suitable means and materials and most convenient accessories comprised in the scope of the following claims.

**Claims**

1. An arrangement for the assemblyu of frontal handrails (1) to children's pushchairs or strollers, characterized in that the handrail (1) at least comprises at one of the handrail sides a box component (6, 7) with a lower opening being detachably inserted into a shank (10) provided in a frontal housing (21) of the associated armrest (9) of the pushchair or stroller, this insertion to be kept up by a flexible retainer (18) also provided in said housing (21), a tooth (8) of the box component engaging therefrom.

2. An arrangement according to claim 1, characterized in that the retainer (18) is projected from the retainer housing (21) so that access to the housing is gained.

3. An arrangement according to claim 1, characterized in that the box component (16) is pivotedly (5) associated to the handrail (1).

4. An arrangement for the assembly of frontal handrails (1) to children's pushchairs or strollers, characterized in that the frame sides of the pushchairs or strollers are provided with box components (6, 7') having a top opening wherein a shank (10') is detachably inserted, the shank (10') and a shankholder component (29) being arranged at least at one side of the handrail (1), this shank (10') being retained in said box component (6', 7') by engagement with a flexible retainer (18') interlocked to the shankholder component (29) by a tooth (8') provided at the box component (6', 7').

5. An arrangement according to claim 4, characterized in that the shankholder component (29) is pivotedly (5) associated to the handrail (1).

**Patentansprüche**

1. Vorrichtung zum Anbringen von vorderen Handleisten (1) an Sportkinderwagon oder Faltkinderwagen, dadurch gekennzeichnet, daß die Handleiste (1) mindestens an einer der Handleistenseiten ein kastenförmiges Bauteil (6, 7) mit einer unteren Öfffnung aufweist, in die lösbar in ein Schaft einsteckbar ist, der in einem vorderen Gehäuse (21) der zugehörigen Armlehne (9) des Sprotkinderwagens oder Faltkinderwagens vorgesehen ist, daß dieser Einsteckzustand durch einen flexiblen Halter (18), der auch in diesem Gehäuse (21) vorgesehen ist, aufrechterhalten wird und daß ein Vorsprung (8) des kastenförmigen Bauteils mit dem Gehäuse in Verbindung steht.

2. Vorrichtung nach Anspruch 1, dadurch gekennzeichnet, daß der Halter (18) aus dem Haltergehäuse (21) so vorsteht, daß ein Zugang zum Gehäuse möglich ist.

3. Vorrichtung nach Anspruch 1, dadurch gekennzeichnet, daß das kastenförmige Bauteil (6) über ein Gelenk (5) mit der Handleiste (1) verbunden ist.

4. Vorrichtung zum Anbringen von vorderen Handleisten (1) an Sportkinderwagen oder Faltkinderwagen, dadurch gekennzeichnet, daß die Rahmenseiten des Sportkinderwagens oder Faltkinderwagens mit kastenförmigen Bauteilen (6', 7') versehen sind, die eine Öffnung an der Oberseite aufweisen, in die ein Schaft (10') lösbar eingesteckt ist, daß der Schaft (10') und ein Schafthalterbauteil (29) an mindestens einer der Seiten der Handleiste (1) angeordnet, sind, und daß der Schaft (10'), der in dem kastenförmigen Bauteil (6', 7') durch Eingriff mit einem flexiblen Halter (18') zuräckgehalten wird, durch einen Vorsprung (8') mit dem Schafthalterbauteil (29) verriegelt ist, der an dem kastenförmigen Bauteil (6', 7') vorgesehen ist.

5. Vorrichtung nach Anspruch 4, dadurch gekennzeichnet, daß das Schafthalterbauteil (29) über ein Gelenk (5) mit der Handleiste (1) verbunden ist.

**Revendications**

1. Dispositif pour l'assemblage de poignées (1) sur des poussettes d'enfants et similaires, caractérisé en ce que la poignée (1) comprend au moins sur l'une de ses extrémités un boîtier (6—7) pourvu d'une ouverture inférieure que l'on engage de manière amovible autour d'une patte (10) ménagée dans un logement avant (21) de l'accoudoir (9) de la poussette, cette coopération étant réalisée grâce à un élément de retenue élastique (18) également prévu dans ledit logement (22), une dent (8) du boîtier s'engageant dans ledit logement.

2. Dispositif suivant la revendication 1, caractérisé en ce que l'élément de retenué (18) est en saillie par rapport au logement (21) afin que le logement soit accessible.

3. Dispositif suivant la revendication 1, caractérisé en ce que l'élément boîtier (6) est relié de manière pivotante (5) à la poignée (1).

4. Dispositif pour l'assemblage de poignées (1) sur des poussettes d'enfants, caractérisé en ce que les côtés du châssis de la poussette sont pourvus de boîtiers (6', 7') comportant une ouverture supérieure dand laquelle un oreille (10') peut être insérée de maînère démontable amovible, l'oreille (10') et son élément de soutien (29) étant disposés à au moins l'une des extrémités de la poignée (1), ladite oreille (10') étant retenue dans ledit élément boîtier (6', 7') par coopération avec un élément de retenue élastique (18'), assujetti à l'élément (29) au moyen d'une dent (8') située sur le boîtier (6', 7').

5. Dispositif suivant la revendication 4, caractérisé en ce que l'élément de soutien (29) est relié à la poignée (1) de manière pivotante (5).

Fig. 1

Fig. 2

Fig. 3

Fig. 4